# EUROPÄISCHE PATENTSCHRIFT

(11) **EP 0 382 895 B1**
(45) Veröffentlichungstag und Bekanntmachung des Hinweises auf die Patenterteilung: **29.12.1993**
(21) Anmeldenummer: 89119584.4
(22) Anmeldetag: 21.10.1989
(51) Int. Cl.: H01Q 1/12

(54) **Fahrzeug-Scheibenantenne**
Vehicle window antenna
Antenne de vitre de véhicule

(30) Priorität: 15.02.1989 DE 3904490
(43) Veröffentlichungstag der Anmeldung: 22.08.1990
(73) Patentinhaber: ROBERT BOSCH GMBH, 70442 Stuttgart (DE)
(72) Erfinder: Militz, Uwe, Dipl.-Ing., D-1000 Berlin 41 (DE)

(56) Entgegenhaltungen:
- EP-A- 0 297 328
- WO-A-87/07770
- FR-A- 2 286 560

## Beschreibung

Die Erfindung geht von einer Fahrzeug-Scheibenantenne nach dem Oberbegriff des Anspruchs 1 aus.

### Stand der Technik

Es ist schon eine Fahrzeug-Scheibenantenne bekannt (US-A-4,439,771, die der europäischen Patentanmeldung EP-A-0 065 263 entspricht), bei der eine Fahrzeugscheibe eine erste, beheizbare Leiteranordnung für den AM-Empfang sowie eine zweite, nicht beheizbare Leiteranordnung für den AM- und eventuell den FM-Empfang aufweist. Bei einer derartigen Aufteilung der Leiteranordnungen kann ein Teil der Fahrzeugscheibe nicht beheizt werden.

Ein weiterer Nachteil besteht darin, daß die Leiteranordnungen nur mit einem höheren technischen Aufwand zu akzeptablen Richtdiagrammen für den AM- und den FM-Empfang und zu einer hohen Empfindlichkeit und Anpaßbarkeit führen.

Weiter bekannt ist aus der EP-A 0 297 328 A2 eine Antennenanordnung für eine Fensterscheibe, die beheizbare FM-Antennen mit Anpaß- und Entkopplungsschaltungen und eine nicht beheizbare AM-Antenne kombiniert. Auch hier wird nur ein Teil der Fensterscheibe beheizt.

### Aufgabe

Der Erfindung liegt die Aufgabe zugrunde, eine Fahrzeug-Scheibenantenne nach dem Oberbegriff des Anspruchs 1 derart weiterzubilden, daß die Fahrzeugscheibe auf ihrer ganzen Fläche beheizt wird und daß ein optimaler AM- und FM-Empfang möglich ist.

### Lösung und erzielbare Vorteile

Diese Aufgabe wird bei einer Fahrzeug-Scheibenantenne gemäß dem Oberbegriff des Anspruchs 1 durch die im kennzeichnenden Teil dieses Anspruchs angegebenen Merkmale gelöst. Die mit der Erfindung erzielbaren Vorteile bestehen insbesondere darin, daß die Fahrzeugscheibe auf ihrer gesamten Fläche beheizt werden kann und daß dennoch ein optimaler Empfang der Signale des AM- und FM-Bereiches möglich ist.

Ein bevorzugtes Anwendungsgebiet für die Erfindung sind Kraftfahrzeug-Heckscheibenantennen.

### Beschreibung

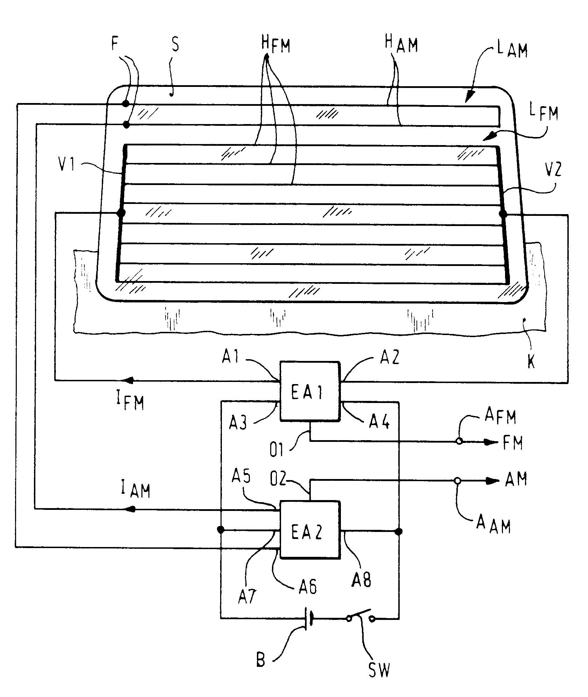

Ein Ausführungsbeispiel der Erfindung ist in der Zeichnung anhand einer Figur dargestellt und wird im folgenden näher beschrieben.

In der einzigen Figur, die ein Schaltbild der Fahrzeug-Scheibenantenne einschließlich ihrer Entkopplungs- und Anpaßmittel zeigt, bezeichnet S eine Fahrzeugscheibe, das ist vorzugsweise die Heckscheibe eines Kraftfahrzeuges, die in die Karosserie K des Fahrzeuges eingesetzt ist. In oder auf der annähernd rechteckigen Fahrzeugscheibe S befindet sich eine erste Leiteranordnung L_{FM} aus parallelen Heizleitern H_{FM}, die etwa zwei Drittel der Höhe der Fahrzeugscheibe einnehmen. Die Heizleiter sind an ihren Enden durch Verbindungsleiter V1 und V2 miteinander verbunden. An die Verbindungsleiter V1 und V2 schließen sich Anschlüsse A1, A2 einer ersten Entkopplungs- und Anpaßschaltung EA1 an, deren weitere Anschlüsse A3 und A4 mit den Polen einer Gleichstromquelle B, das ist vorzugszweise eine Kraftfahrzeugbatterie, verbunden sind. Zwischen der Gleichstromquelle B und dem Anschluß A4 ist ein Schalter SW vorgesehen. Ein Ausgang 01 der ersten Entkopplungs- und Anpaßschaltung EA1 führt zu einem Anschluß A_{FM} für FM-Signale. In oder auf der Fahrzeugscheibe S befindet sich vorzugsweise oberhalb der ersten Leiteranordnung L_{FM} eine von der ersten Leiteranordnung räumlich und elektrisch getrennte zweite Leiteranordnung L_{AM}, die in dem Ausführungsbeispiel aus zwei an einem Ende miteinander verbundenen, eine Heizschleife bildenden Heizleitern H_{AM} besteht. Die beiden freien Enden F der zweiten Leiteranordnung L_{AM} sind mit Anschlüssen A5 und A6 einer zweiten Entkopplungs- und Anpaßschaltung EA2 verbunden. Zwei weitere Anschlüsse A7 und A8 der zweiten Entkopplungs- und Anpaßschaltung sind mit den Polen der Gleichstromquelle B verbunden. Ein Ausgang 02 der zweiten Entkopplungs- und Anpaßschaltung führt an einen Anschluß A_{AM} für AM-Signale.

Die Wirkungsweise der vorstehend beschriebenen Schaltung ist folgende.

Die den Leiteranordnungen L_{FM} und L_{AM} zugeordneten Entkopplungs- und Anpaßschaltungen EA1 und EA2 haben einen dem Fachmann bekannten Aufbau; vgl. zum Beispiel US-A-4,439,771. Wird der Schalter SW geschlossen, so erhalten die erste Leiteranordnung L_{FM} ihren Heizstrom I_{FM} aus der Stromquelle B über die erste Entkopplungs- und Anpaßschaltung EA1 und die zweite Leiteranordnung L_{AM} ihren Heizstrom I_{AM} ebenfalls aus der Gleichstromquelle B über die zweite Entkopplungs- und Anpaßschaltung EA2. Der Gleichstrom I_{AM} für die zweite Leiteranordnung L_{AM} ist erheblich kleiner als der Heizstrom I_{FM} für die erste Leiteranordnung L_{FM}. Dadurch können die Entkopplungsmittel der zweiten Entkopplungs- und Anpaßschaltung für den geringeren Heizstrom ausgelegt sein. Die Entkopplungsmittel bewirken in bekannter Weise, daß die in den Leiteranordnungen induzierten HF-Spannungen nicht über die Gleichstromquelle B kurzgeschlossen werden. An den Anschlüssen A_{AM} und A_{FM} der Entkopplungs- und Anpaßschaltungen EA1 und EA2 stehen die Signale des FM- und des AM-Bereiches zur Weiterleitung zum Beispiel an ein Autoradio zur Verfügung.

In einer alternativen Ausführungsform der Fahrzeug-Scheibenantenne sind die Heizleiter H_{AM}, H_{FM} der beiden Leiteranordnungen L_{FM}, L_{AM} an einem Ende, vorzugsweise auf der dem Verbindungsleiter V2 zugewandten Seite, mit dem Massepotential verbunden.

## Patentansprüche

1. Fahrzeug-Scheibenantenne mit einer in oder auf der Scheibe vorgesehenen ersten Leiteranordnung (L_{FM}) für den FM-Empfang, die mehrere parallelgeschaltete, aus einer Gleichstromquelle (B) über eine erste Entkopplungs- und Anpaßschaltung (EA1) gespeiste Heizleiter umfaßt und einer zweiten, für den AM-Empfang bestimmten, von der ersten Leiteranordnung räumlich getrennten Leiteranordnung (L_{AM}), dadurch gekennzeichnet, daß eine zweite Entkopplungs- und Anpaßschaltung (EA2) vorgesehen ist und die Leiter der zweiten Leiteranordnung (L_{AM}) Heizleiter (H_{AM}) sind, die über die zweite Entkopplungs- und Anpaßschaltung (EA2) mit einem im Vergleich zu den Heizleitern (H_{FM}) der ersten Leiteranordnung kleineren Gleichstrom (I_{AM}) beaufschlagt werden und deren Heizleiterzahl kleiner ist als die Zahl der Heizleiter (H_{FM}) der ersten Leiteranordnung (L_{FM}).

2. Fahrzeug-Scheibenantenne nach Anspruch 1, dadurch gekennzeichnet, daß die Heizleiter (H_{AM}) der zweiten Leiteranordnung (L_{AM}) eine Heizleiterschleife oder mehrere parallelgeschaltete Heizleiterschleifen bilden.

3. Fahrzeug-Scheibenantenne nach Anspruch 1 oder 2, dadurch gekennzeichnet, daß die erste Leiteranordnung (L_{FM}) mindestens zwei Drittel und die zweite, zu der ersten Leiteranordnung parallel angeordnete Leiteranordnung (L_{AM}) den Rest der Höhe der Fahrzeugscheibe (S) einnimmt.

4. Fahrzeug-Scheibenantenne nach Anspruch 1 oder 3, dadurch gekennzeichnet, daß die Heizleiter (H_{AM}, H_{FM}) der ersten und zweiten Leiteranordnung (L_{AM}, L_{FM}) einseitig mit dem Massepotential verbunden sind.

## Claims

1. Vehicle window-integrated antenna having a first conductor arrangement (L_{FM}), provided in or on the window, for FM reception, which comprises a plurality of parallel-connected heating conductors which are fed from a DC current source (B) via a first decoupling and matching circuit (EA1), and a second conductor arrangement (L_{AM}), which is intended for AM reception and is spatially separate from the first conductor arrangement, characterised in that a second decoupling and matching circuit (EA2) is provided and the conductors of the second conductor arrangement (L_{AM}) are heating conductors (H_{AM}), to which there is applied via the second decoupling and matching circuit (EA2) a DC current (I_{AM}) which is smaller by comparison with the heating conductors (H_{FM}) of the first conductor arrangement, and the number of heating conductors of which is smaller than the number of the heating conductors (H_{FM}) of the first conductor arrangement (L_{FM}).

2. Vehicle window-integrated antenna according to Claim 1, characterised in that the heating conductors (H_{AM}) of the second conductor arrangement (L_{AM}) form a heating conductor loop or a plurality of parallel-connected heating conductor loops.

3. Vehicle window-integrated antenna according to Claim 1 or 2, characterised in that the first conductor arrangement (L_{FM}) occupies at least two thirds, and the second conductor arrangement (L_{AM}), which is arranged in parallel with the first conductor arrangement, occupies the remainder of the height of the vehicle window (S).

4. Vehicle window-integrated antenna according to Claim 1 or 3, characterised in that the heating conductors (H_{AM}, H_{FM)} of the first and second conductor arrangements (L_{AM}, L_{FM}) are connected at one end to the frame potential.

## Revendications

1. Antenne de vitre de véhicule, avec un premier montage conducteur L_{FM} prévu sur la vitre pour la réception FM, qui comprend plusieurs conducteurs chauffants, branchés en parallèle, alimentés par une source de courant continu B par l'intermédiaire d'un premier circuit de découplage et d'accommodation EA1 et avec un deuxième montage conducteur L_{AM}, déterminé pour la réception AM, séparé dans l'espace du premier montage conducteur, caractérisée en ce qu'il est prévu un deuxième circuit de découplage et d'accommodation (EA2) et les conducteurs du deuxième montage conducteur (L_{AM}) sont des conducteurs chauffants (H_{AM}), qui sont soumis par l'intermédiaire du deuxième circuit de découplage et d'accommodation (EA2) à un courant continu (I_{AM}) plus faible par comparaison avec les conducteurs chauffants (H_{FM}) du premier montage conducteur et dont le nombre de conducteurs chauffants est plus petit que le nombre des conducteurs chauffants (H_{FM}) du premier montage conducteur (L_{FM}).

2. Antenne de vitre de véhicule selon la revendication 1, caractérisée en ce que les conducteurs chauffants (H_{AM}) du deuxième montage conducteur (L_{AM}) forment une boucle de conducteurs chauffants ou forment plusieurs boucles de conducteurs chauffants branchées en parallèle.

3. Antenne de vitre de véhicule selon les revendications 1 ou 2, caractérisée en ce que le premier montage de conducteurs (L_{FM}) occupe au moins les deux tiers de la hauteur de la vitre du véhicule (S) et le deuxième montage de conducteurs (L_{AM}) disposé parallèlement au premier montage de conducteurs en occupe le reste.

4. Antenne de vitre de véhicule selon les revendications 1 à 3, caractérisée en ce que les conducteurs chauffants (H_{AM}, H_{FM}) du premier et du deuxième montage de conducteur (L_{AM}, L_{FM}) sont reliés d'un côté à la masse.
